# EUROPEAN PATENT SPECIFICATION

(11) **EP 2 727 770 B1**
(45) Date of publication and mention of the grant of the patent: **29.07.2015**
(21) Application number: 13191698.3
(22) Date of filing: 05.11.2013
(51) Int. Cl.: B60Q 3/02

(54) **Automotive reconfigurable overhead light assembly**
Rekonfigurierbare Autodeckenleuchtenanordnung
Ensemble de lampe plafonnier reconfigurable pour automobile

(30) Priority: 05.11.2012 IT TO20120965
(43) Date of publication of application: 07.05.2014
(73) Proprietor: Fiat Group Automobiles S.p.A., 10135 Torino (TO) (IT)
(72) Inventor: Gallas, Cristian, 10135 TORINO (IT)
(74) Representative: Bergadano, Mirko

(56) References cited:
- EP-A1- 0 899 157
- EP-A2- 1 853 096
- WO-A2-2008/024985
- DE-A1- 10 202 955
- DE-A1- 19 848 820
- DE-U1-202009 012 306
- US-A1- 2002 145 871
- US-A1- 2004 264 205
- US-A1- 2005 207 158
- US-A1- 2009 193 640
- US-A1- 2010 177 530

## Description

### TECHNICAL FIELD OF INVENTION

The present invention relates to automotive interior lighting in general and, in particular, to an automotive reconfigurable interior front overhead light assembly.

### STATE OF THE ART

As is known, the continuous development of new models of motor vehicles in the automotive sector brings with it the inevitable redesign of countless motor vehicle components dictated by new technical/styling requirements demanded by the market.

With regard to automotive overhead light assemblies, their redesign is dictated by considerations that are sometimes of an essentially decorative nature, while other times they are of a technical nature and, in general, concern the consumption of electrical resources, safety and overall performance in terms of lighting.

Considerations of a technical nature generally result in using electric light sources and control elements for switching the electric light sources on and off of one type rather than another, for example, leading to using LED rather than incandescent electric light sources, or control elements that are backlit or otherwise and constituted by rocker switches rather than pushbutton switches, by traditional pushbutton switches, so-called push-push switches, rather than momentary or latching pushbutton switches, and so on.

US 2004/264205 A1 discloses a method for installing a modular light assembly in a vehicle, wherein a common printed circuit board base is first provided, one of a plurality of different types of illumination sources is then attached onto the printed circuit board base to form a modular light assembly, and the modular light assembly is then mounted onto one of a plurality of trim bezels.

### SUBJECT AND ABSTRACT OF THE INVENTION

For evident economic reasons, the applicant became aware of the need to identify solutions aimed at increasing the level of standardization and possibilities of reconfiguration according to the requirements of the automotive overhead light assemblies in order to reduce production costs.

The object of the present invention is therefore providing an automotive reconfigurable interior overhead light assembly.

According to the present invention, an automotive reconfigurable interior overhead light assembly is provided, as defined in the appended claims.

### BRIEF DESCRIPTION OF DRAWINGS

- Figures 1 and 2 show perspective views, from above and below, of an automotive reconfigurable overhead light assembly according to the present invention;
- Figures 3 and 4 show exploded views, from above and below, of the overhead light assembly in Figures 1 and 2;
- Figures 5, 6 and 7 show perspective views of a printed circuit, along with details thereof, forming part of the overhead light assembly in Figure 1;
- Figure 8 shows a perspective view of a possible embodiment of a portion of the printed circuit in Figures 5-7; and
- Figures 9 and 10 show wiring diagrams implemented by the printed circuit in Figures 5-7.

### DETAILED DESCRIPTION OF PREFERRED EMBODIMENTS OF THE INVENTION

The present invention will now be described in detail with reference to the attached figures to allow an expert in the field to embody it and use it. Various modifications to the described embodiments will be immediately obvious to experts in the field, and the generic principles described herein can be applied to other embodiments and applications without departing from the scope of the present invention, as defined in the appended claims. Thus, the present invention should not be considered as limited to the embodiments set forth herein, but is to be accorded the widest scope consistent with the principles and features disclosed and claimed herein.

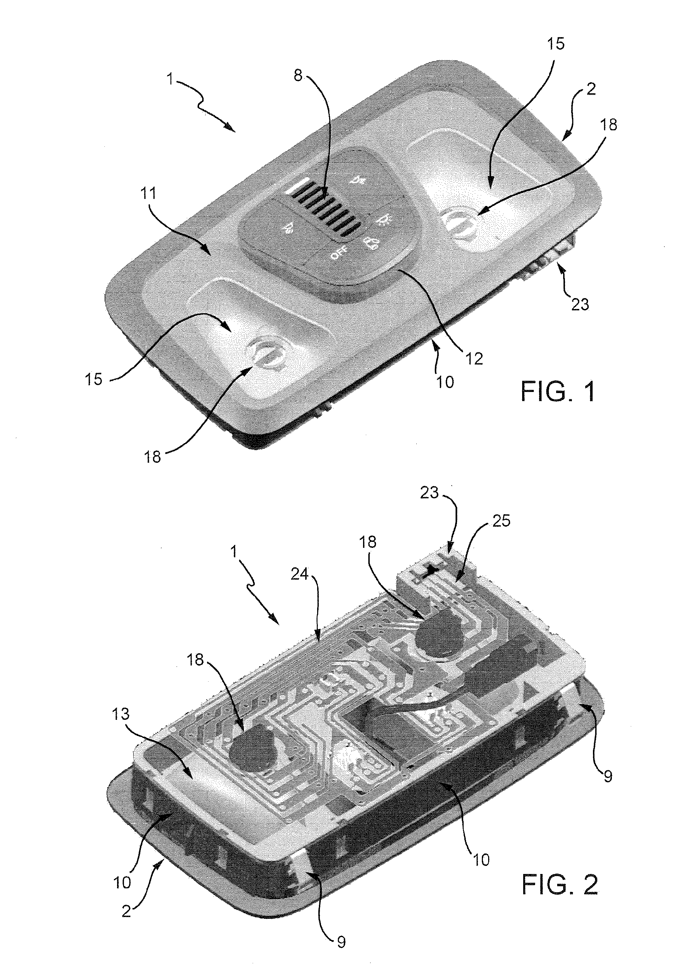

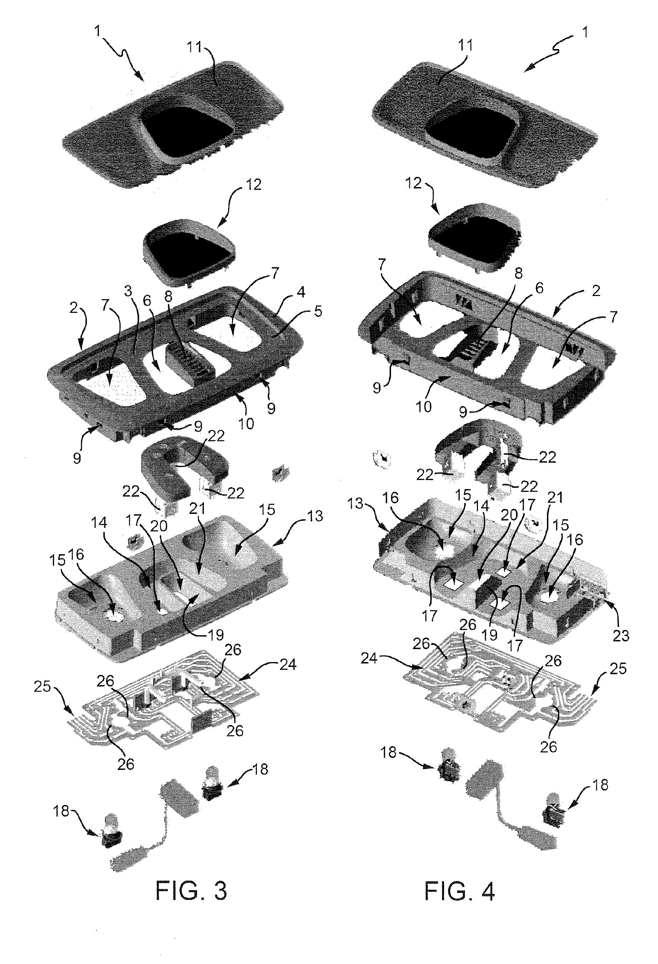

An automotive reconfigurable interior overhead light assembly according to the present invention, in particular a front overhead light assembly, namely located in the front area of the motor vehicle interior to light the driver's seat and front passenger seat, is shown in Figures 1-4, where it is indicted as a whole by reference numeral 1.

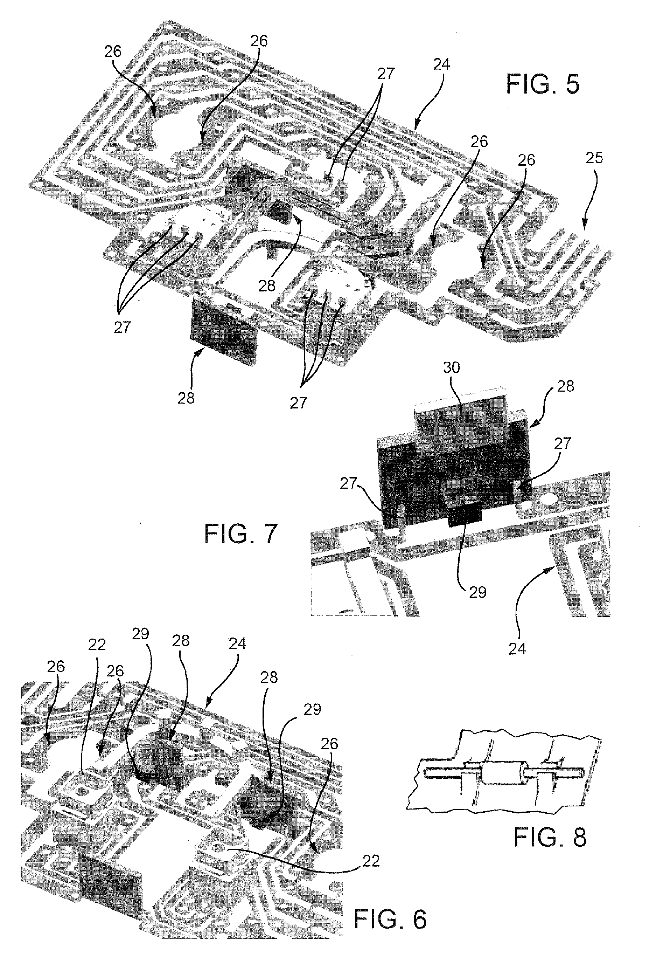

As shown in these figures, the overhead light assembly 1 is housed in a removable manner inside a corresponding seat made in roof of the motor vehicle interior and essentially comprises:
- a escutcheon 2 conveniently made of a PC-ABS alloy and defined by a perforated plate, of generally rectangular shaped in the example shown, having a central portion 3 recessed with respect to its external border 4 to define a seat 5, this also generally rectangular in shape, for a transparent cover panel for the openings, and in which three openings are provided, two lateral 7 ones for the electric light sources and a central 6 one for the electrical switches controlling the electric light sources. In addition, the escutcheon 2 integrally comprises a microphone cover grille 8 projecting into the central opening 6, and perimeter connection interfaces 9 obtained on a perimeter collar 10 projecting from the opposite face of the escutcheon 2 from that on which the seat 5 is provided and conveniently constituted by elastic connecting tabs suitable for snap-engaging matching seats made in the seat of the overhead light assembly in the roof of the motor vehicle interior;
- a transparent cover panel 11 conveniently made of polycarbonate and shaped so as to snap-fit into the seat 5 in the escutcheon 2 and close the three opening 6 and 7 by means of fastening connections suitable for engaging matching seats made in the raised border 4 of the escutcheon 2 externally delimiting the seat 5;
- a chromed ring 12 conveniently made of ABS, having a shape corresponding to that of the central opening 6 in the escutcheon 2 and housed in it, by snap fitting, so as to project from the surface of the recessed central portion 3 of the escutcheon 2;
- a parabolic body 13 conveniently made of polypropylene and generally rectangular in shape, which is shaped to couple with the collar 10 of the escutcheon 2 in a removable manner via opportune perimeter connection interfaces conveniently constituted by coupling teeth suitable for engaging matching openings made in the collar 10. The parabolic body 13 is shaped so as to define a central cavity 14 and two lateral cavities 15, arranged in alignment with and facing the central opening 6 and lateral openings 7 of the escutcheon 2, respectively, wherein the lateral cavities 15 are provided with central openings 16, of circular shape in the example shown, shaped such that they can be engaged by respective electric light sources 18, for example of the LED or incandescent type, suitable for lighting the driver's seat and front passenger seat, respectively, and commonly known by the term "courtesy lights". The parabolic body 13 also integrally defines a wall 19 with a generally U-like shape projecting into the central cavity 14 so as to define a pass-through inner seat 20, of a generally rectangular shape in the example shown, arranged in alignment with the microphone cover grille 8 of the escutcheon 2 and shaped so as to house a snap-fitted microphone (not shown), and an outer seat 21, of a generally U-like shape in the example shown, provided with three openings 17, of a rectangular shape in the example shown, arranged to align with, and shaped so that they can be engaged by, three electrical switches 22 for controlling the electric light sources 18 and fitted with covers conveniently made of a PC-ABS alloy, with backlit ideograms conveniently made of polyoxymethylene, two of which, the lateral ones in the example shown, are pushbutton switches intended for switching the electric light sources 18 on and off, while the third, the central one in the example shown, is a rocker switch for enabling and disabling the switching on of a central courtesy light when the doors of the motor vehicle are opened. Finally, the parabolic body 13 is shaped so as to integrally define an electrical connection seat 23 of the overhead light assembly 1 suitable for being engaged, in use, by an external electrical connector (not shown) through which the overhead light assembly 1 is connected, in use, to an automotive electrical system; and
- a printed circuit 24, an unsupported printed circuit in the example shown (see also Figures 5-7), which is carried directly by the parabolic body 13, on the opposite side of the latter with respect to the escutcheon 2, and is constituted by electrically conductive tracks made from punched metal, conveniently FeP01, which are made integral with one another in an opportune manner, via bridges in the example shown, so as to form a single assembly and are made so as to define, among other things, electrical I/O terminals 25 of the printed circuit 24 arranged in seat 23 of the parabolic body 13 that, in use, will be engaged by an external electrical connector, electrical terminals 26 to electrically connect the two electric light sources 18, electrical terminals 27 to electrically connect the electrical switches 22, an electrical circuit to connect the electrical switches 22 and the electric light sources 18 to each other and to the electrical I/O terminals 25 of the printed circuit 24, as well as electrical terminals to connect printed circuits 28 equipped with LEDs 29 for backlighting the electrical switches 22 of a night panel 30 via specially provide prismatic light guides conveniently made of polycarbonate.

According to variants that are not shown, the overhead light assembly 1 could be made in a version with a so-called baby view mirror, namely fitted with a mirror oriented to allow the driver and front passenger to keep an eye on the rear seats, or in a so-called sunroof version, namely one fitted with additional control buttons for opening and closing a sunroof.

According to the present invention, the printed circuit 24 is designed to allow reconfiguration of the overhead light assembly 1 in terms of:
a) interchangeability of the electric light sources 18, to allow indifferent usage of different types of electric light sources that, due to their nature or operating mode, require different circuit topologies for their power supply, in particular electric light sources of the incandescent type, conveniently halogen lamps, or of the LED type; and
b) interchangeability of electrical switches 22 to allow indifferent usage of electrical switches 22 provided with covers with or without backlightable ideograms and, independently of this, different types of electrical switches 22 that, due to their nature or operating mode, require different circuit topologies to switch the electric light sources 18 on and off, in particular push-push switches or momentary pushbutton switches.

Furthermore, with reference to reconfiguration as in b), conveniently the printed circuit 24 is further designed to allow reconfiguration of the overhead light assembly 1 also in terms of:
c) backlighting of the electrical switches 22, when electrical switches 22 fitted with covers having backlightable ideograms are used in the overhead light assembly 1.

To allow reconfiguration of the overhead light assembly 1 as in a), the printed circuit 24 is designed to allow indifferently either lamp holders for incandescent lamps, conveniently halogen lamps, or printed circuits on which LEDs are mounted to be electrically connected at electrical terminals 26 for the electric light sources 18.

Furthermore, given that the power supply of a LED-type electric light source requires the presence of an electrical resistor connected in series with the electric light source, an electrical break is made along one of the two electrically conductive tracks provided for powering each of the electric light sources 18 that splits the electrically conductive track into two electrically isolated segments, the electrical continuity of which can be re-established by means of an electrically conductive connecting element that can be mounted on the printed circuit 24 to electrically bridge the ends of the two segments of the interrupted electrically conductive track and which can be chosen from either an electrical resistor of opportune electrical resistance for powering a LED, when a LED is used as an electric light source 18, or a piece of electric conductor of substantially null electrical resistance with respect to that of the electrical resistor, so as to create a short circuit, when an incandescent lamp is used as an electric light source 18.

Different techniques can be employed for stably retaining this connection element in position.

One of these techniques could be, for example, that described in US 2007/0259576 A1, according to which, as shown in Figure 8, the ends of the two segments of the electrically conductive track that are electrically separated by the break are snipped in such a way as to form two pairs of facing tabs, which are bent out from the electrically conductive track so as to form two connectors suitable for receiving and stably retaining in a removable manner the corresponding end portions of the piece of electric conductor or leads of the electrical resistor.

Another of these techniques could be that of providing, at each electrical break of the electrically conductive tracks, an associated seat in the parabolic body 13 shaped to receive and stably retain the electrically conductive element in a removable manner, such that the end portions of the piece of electric conductor or leads of the electrical resistor make electrical contact with the ends of the two electrically isolated segments of the electrically conductive track. In this regard, each seat must therefore be equipped with appropriate means of retaining the connection element, conveniently constituted by coupling teeth.

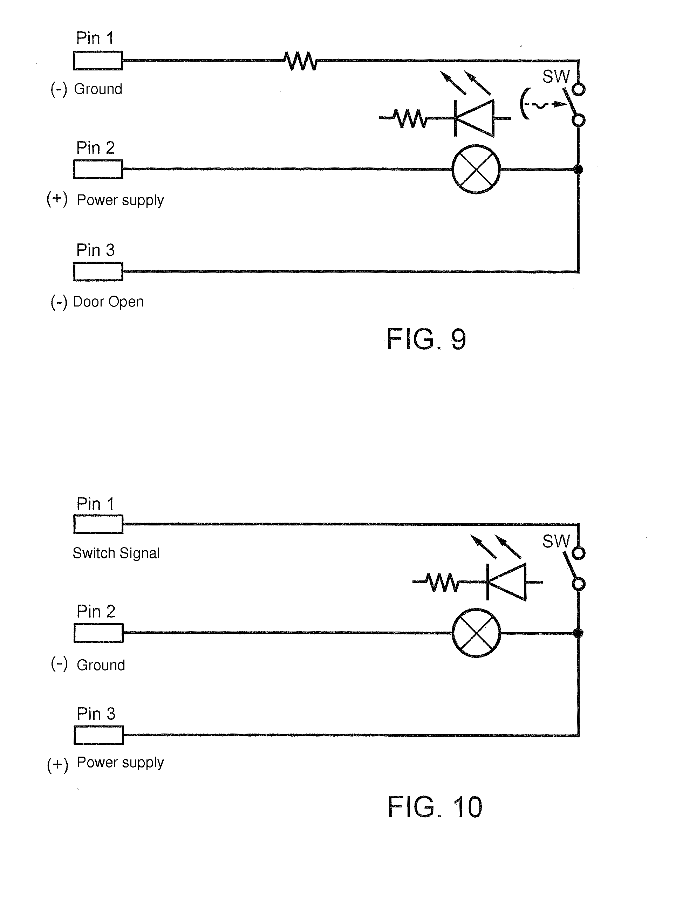

Instead, to allow reconfiguration of the overhead light assembly 1 as in b), the printed circuit 24 is designed in to implement the electrical circuits shown in Figures 9 and 10, which refer to the use of a push-push switch and a momentary pushbutton switch, respectively. As may be noted, the electrical circuits shown in Figures 9 and 10 have the same circuit topology, with obvious benefits in terms of reduced area of occupation of the printed circuit 24, which enables the utilization of different types of switches by simply changing the external electrical connection implemented by the external electrical connector that engages, in use, seat 23 of the parabolic body 13, as will be explained below.

In detail, the printed circuit 24 is designed to indifferently allow push-push switches or momentary pushbutton switches to be electrically connected, for example by soldering, at the electrical terminals 27 for the electrical switches 22 for which this option is contemplated.

Each pair of electrical terminals 27 is constituted by the ends of two electrically conductive tracks, one of which electrically connects the electrical terminal of the corresponding pushbutton switch 22 to a first electrical I/O terminal 25 of the printed circuit 24, indicated in Figures 9 and 10 as "Pin 1", through an optional electrical resistor (which for this reason, is not shown in Figure 10) arranged along the electrically conductive track, while the other electrically conductive track electrically connects the electrical terminal of the corresponding pushbutton switch 22 to both a second electrical I/O terminal 25 of the printed circuit 24, indicated in Figures 9 and 10 as "Pin 3", and an electrical terminal of a corresponding electric light source 18 to be switched on/off, whether this be an incandescent electric light source (represented by an unbroken line) or a LED electric light source provided with an associated power supply resistor (represented by an broken line), the other electrical terminal of which is connected, by an electrically conductive track, to a third electrical I/O terminal 25 of the printed circuit 24, indicated in Figures 9 and 10 as "Pin 2".

Depending on how the external electrical connections are made for the three electrical terminals Pin1, Pin2 and Pin3 of the printed circuit 24, the same circuit topology shown in Figures 9 and 10 enables the use of either a push-push switch or a momentary pushbutton switch.

In particular, as shown in Figure 9, when a push-push switch is used, all three electrical terminals Pin 1, Pin2 and Pin3 are used as electrical input terminals, in which the first electrical terminal Pin1 is electrically connected to an electric ground potential, the second electrical terminal Pin2 is electrically connected to a (positive) power supply potential and the third electrical terminal Pin3 is electrically connected to all the switches associated with, and operated by, the doors of the motor vehicle, which are in turn connected to an electric ground potential. The door switches are open when the corresponding doors are closed and are closed when the corresponding doors are open, thus resulting in the third electrical terminal Pin3 being floating when all the doors are closed and being connected to an electric ground potential when any one of the doors is opened.

In this way, the corresponding electric light source 18 is switched on either when any door of the motor vehicle is open, as the electric light source 18 becomes connected between the power supply potential applied to the second electrical terminal Pin2 and the electric ground potential applied to the third electrical terminal Pin3, or when push-push switch 22 is pressed, as the electric light source 18 becomes connected between the power supply potential applied to the second electrical terminal Pin2 and the electric ground potential applied to the first electrical terminal Pin1.

Instead, Figure 10 shows how the external electrical connections are made for the three electrical terminals Pin1, Pin2 and Pin3 of the printed circuit 24 when a momentary pushbutton switch is used.

Finally, to allow reconfiguration of the overhead light assembly 1 as in c), the printed circuit 24 is designed to provide, at the location of each electrical switch 22 that can be chosen as a backlit or non-backlit switch, two power supply terminals 27 to which it is possible to electrically connect, for example by soldering or crimping, corresponding electrical terminals of an electric backlight source, conveniently of the LED type, or, when necessary, multiple backlight power sources connected to each other in series, and which are constituted by the ends of two electrically conductive tracks connected to the electrical I/O terminals 25 of the printed circuit 24, so that they can be respectively polarized at a (positive) power supply potential and an electric ground potential.

If the backlighting of an electrical switch 22 is performed by one or more backlight power sources of the LED type, in addition to providing an electrical resistor in series with the backlight power source(s), an electrical resistor in parallel with the backlight power source(s) is also required, while the provision and electrical connection of the electrical resistors necessary for correct polarization of the backlight power sources is performed using the technique previously described regarding reconfiguration of the overhead light assembly 1 as in a). In particular, the connection of an electrical resistor in parallel with the backlight power source(s) can be performed by making an interrupted electrically conductive track connected in parallel to the electrical terminals to which the backlight power sources will be connected and the electrical continuity of which can be re-established by the connection of the electrical resistor the moment when the backlight power source(s) is/are connected to the associated electrical terminals for backlighting the electrical switch 22.

## Claims

1. An automotive reconfigurable interior overhead light assembly (1) comprising:
• a support body (2, 13) fastenable in a seat made in an interior roof of a motor vehicle;
• a printed circuit (24) carried by the support body (2, 13) and comprising electrically conductive tracks formed to define electrical I/O terminals (25) of the printed circuit (24) engageable by an external electrical connector, electrical terminals (26) to electrically connect at least one electric light source (18), electrical terminals (27) to electrically connect at least one electrical switch (22), and an electrical circuit to connect the electrical switch (22) and the electric light source (18) to each other and to the electrical I/O terminals (25) of the printed circuit (24);
• at least one electric light source (18) electrically connected to the corresponding electrical terminals (26) of the printed circuit (24) for lighting an area of the motor vehicle interior; and
• at least one electrical switch (22) electrically connected to the corresponding electrical terminals (26) of the printed circuit (24) to control the electric light source (18);
wherein the printed circuit (24) is designed to allow:
a) interchangeability of the electric light source (18), so as to allow indifferent usage of different types of electric light sources that, due to their nature or operating mode, require different circuit topologies for their power supply; and
b) interchangeability of the electrical switch (22) so as to allow indifferent usage of different types of electrical switches (22) that, due to their nature or operating mode, require different circuit topologies to switch the electric light source (18) on and off;
**characterized in that** the printed circuit (24) is further designed to allow:
c) backlighting of an electrical switch (22), when an electrical switch (22) fitted with a cover having a backlightable ideogram is used in the overhead light assembly (1);
wherein, as to allow reconfiguration as in c), the printed circuit (24) is designed to form, at each location of an electrical switch (22) that can be chosen as a backlit or non-backlit switch, two power supply terminals (27) connected to the electrical I/O terminals (25) of the printed circuit (24) and to which corresponding electrical terminals of an electric backlight source may be electrically connected.

2. An automotive reconfigurable interior overhead light assembly (1) according to claim 1, wherein, as to allow reconfiguration as in a), the printed circuit (24) is designed to provide, along one of the two electrically conductive tracks supplying power to the electric light source (18), an electrical break that splits the electrically conductive track into two electrically isolated segments, the electrical continuity of which can be re-established by means of an electrically conductive connecting element that can be mounted on the printed circuit (24) to electrically bridge the ends of the two segments of the interrupted electrically conductive track and which can be chosen from different electrical components required for supplying power to the different types of electric light source.

3. An automotive reconfigurable interior overhead light assembly (1) according to claim 2, wherein the printed circuit (24) is designed to allow indifferently either an incandescent electric light source or a LED electric light source to be electrically connected to the electrical terminals (26) for the electric light source (18); and wherein the electrical component can be chosen from either an electrical resistor necessary for supplying power to a LED electric light source or a piece of electric conductor suitable to make a short circuit for supplying power to an incandescent electric light source.

4. An automotive reconfigurable interior overhead light assembly (1) according to claim 3, wherein the ends of the two segments of the electrically conductive track that are electrically separated by the break form two pairs of facing, bent out tabs of the electrically conductive track so as to form two connectors adapted to receive and stably retain in a removable manner corresponding end portions of the piece of electric conductor or leads of the electrical component.

5. An automotive reconfigurable interior overhead light assembly (1) according to claim 3, wherein the support body (2, 13) defines, at the electrical break of the electrically conductive track, an associated seat so shaped as to receive and stably retain in a removable manner the electrically conductive connecting element, so that end portions of the piece of electrical conductor or leads of the electrical component come into electric contact with the ends of the two electrically isolated segments of the electrically conductive track.

6. An automotive reconfigurable interior overhead light assembly (1) according to any of the preceding claims, wherein, as to allow reconfiguration as in b), in which the printed circuit (24) is designed to form an electrical circuit having a circuit topology such that using different electrical switches (22) only requires changing the external electrical connection of the electrical I/O terminals (25) of the printed circuit (24).

7. An automotive reconfigurable interior overhead light assembly (1) according to claim 6, wherein the printed circuit (24) is designed to allow indifferently either a push-push switch or a momentary pushbutton switch to be electrically connected to the electrical terminals (27) for the electrical switch (22);
wherein the printed circuit (24) is designed to form an electrical circuit wherein one of the two electrical terminals (27) for the electrical switch (22) is electrically connected to a first (Pin 1) electrical I/O terminal (25) of the printed circuit (24) and the other of the two electrical terminals (27) for the electrical switch (22) is electrically connected both to a second (Pin 2) electrical I/O terminal (25) of the printed circuit (24) and to one of the two electrical terminals (26) for the electric light source (18) to be controlled, while the other of the two electrical terminals (26) for the electric light source (18) is electrically connected to a third (Pin 3) electrical I/O terminal (25) of the printed circuit (24);
wherein, if a push-push switch is used, the first (Pin 1) electrical I/O terminal (25) of the printed circuit (24) is intended to be electrically connected to an electric ground potential, the second (Pin 2) electrical I/O terminal (25) of the printed circuit (24) is intended to be electrically connected to an power supply potential and the third (Pin 3) electrical I/O terminal (25) of the printed circuit (24) is intended to be electrically connected to switches associated with, and operated by, motor vehicle doors, which are in turn connected to an electric ground potential, so as to result in the third (Pin 3) electrical I/O terminal (25) of the printed circuit (24) being floating when all the doors are closed and being connected to an electric ground potential when any one of the doors is opened, whereby the electric light source (18) is turned on either when any one of the doors is opened or when the push-push switch (22) is operated;
and wherein, if a momentary pushbutton switch is used, the first (Pin 1) electrical I/O terminal (25) of the printed circuit (24) is intended to receive an input signal, the second (Pin 2) electrical I/O terminal (25) of the printed circuit (24) is intended to be electrically connected to an electric ground potential, and the third (Pin 3) electrical I/O terminal (25) of the printed circuit (24) is intended to be electrically connected to a power supply potential.

## Patentansprüche

1. Umkonfigurierbare innere Kraftfahrzeug-Deckenlichteinheit (1), die Folgendes umfasst:
• einen Tragkörper (2, 13), der in einem Sitz, der in einem Innendach eines Kraftfahrzeugs hergestellt ist, befestigbar ist;
• eine Leiterplatte (24), die von dem Tragkörper (2, 13) getragen wird und umfaßt: elektrisch leitende Bahnen, die gebildet sind, um E/A-Stromklemmen (25) der Leiterplatte (24) zu definieren, in die ein externer Stromstecker eingreifen kann; Stromklemmen (26), um mindestens eine elektrische Lichtquelle (18) elektrisch zu verbinden; Stromklemmen (27), um mindestens einen Stromschalter (22) elektrisch zu verbinden; und einen Stromkreis, um den Stromschalter (22) und die elektrische Lichtquelle (18) miteinander und mit den E/A-Stromklemmen (25) der Leiterplatte (24) zu verbinden;
• mindestens eine elektrische Lichtquelle (18) die elektrisch mit den entsprechenden Stromklemmen (26) der Leiterplatte (24) zum Beleuchten eines Bereichs des Inneren des Kraftfahrzeugs verbunden ist; und
• mindestens einen Stromschalter (22), der elektrisch mit den entsprechenden Stromklemmen (26) der Leiterplatte (24) verbunden ist, um die Stromquelle (18) zu steuern;
wobei die Leiterplatte (24) ausgelegt ist, um Folgendes zu erlauben:
a) gegenseitige Austauschbarkeit der elektrischen Lichtquelle (18), um unterschiedslosen Gebrauch verschiedener Typen elektrischer Lichtquellen zu erlauben, die aufgrund ihrer Beschaffenheit oder ihres Betriebsmodus unterschiedliche Stromkreistopologien für ihre Stromversorgung benötigen; und
b) Austauschbarkeit des Stromschalters (22), so dass unterschiedsloser Gebrauch unterschiedlicher Typen von Stromschaltern (22) erlaubt wird, die aufgrund ihrer Beschaffenheit oder ihres Betriebsmodus unterschiedliche Stromkreistopologien benötigen, um die elektrischen Lichtquellen (18) ein- und auszuschalten,
**dadurch gekennzeichnet, dass** die Leiterplatte (24) ferner ausgelegt ist, um Folgendes zu erlauben:
c) Hintergrundbeleuchten eines Stromschalters (22), wenn ein Stromschalter (22), der mit einer Kappe ausgestattet ist, die ein Ideogramm, dessen Hintergrund beleuchtet werden kann, in der Deckenlichteinheit (1) verwendet wird,
wobei, um die Umkonfiguration wie in c) zu erlauben, die Leiterplatte (24) ausgelegt ist, um an jeder Stelle eines Stromschalters (22), der als Einschalter mit oder ohne Hintergrundbeleuchtung ausgewählt werden kann, zwei Stromversorgungsklemmen (27) zu bilden, die mit den E/A-Stromklemmen (25) der Leiterplatte (24) verbunden sind und mit welchen entsprechende Stromklemmen einer Hintergrundbeleuchtungsstromquelle elektrisch verbunden werden können.

2. Umkonfigurierbare innere Kraftfahrzeug-Deckenlichteinheit (1) nach Anspruch 1, wobei, um die Umkonfiguration wie in a) zu erlauben, die Leiterplatte (24) ausgelegt ist, um entlang einer der zwei elektrisch leitenden Bahnen, die Strom zu der elektrischen Lichtquelle (18) liefern, eine Stromunterbrechung bereitzustellen, die die elektrisch leitende Bahnen in zwei elektrisch isolierte Segmente aufteilt, deren elektrische Kontinuität mittels eines elektrisch leitenden Verbindungselements wiederhergestellt werden kann, das auf die Leiterplatte (24) montiert werden kann, um die Enden der zwei Segmente der unterbrochenen elektrisch leitenden Bahnen zu überbrücken, und das aus unterschiedlichen elektrischen Bauteilen ausgewählt werden kann, die zum Liefern von Strom zu den verschiedenen Typen elektrischer Lichtquellen erforderlich sind.

3. Umkonfigurierbare innere Kraftfahrzeug-Deckenlichteinheit (1) nach Anspruch 2, wobei die Leiterplatte (24) ausgelegt ist, um unterschiedslos zu erlauben, entweder eine elektrische Glühbirnenlichtquelle oder eine elektrische LED-Lichtquelle elektrisch mit den Stromquellen (26) für die elektrische Lichtquelle (18) zu verbinden, und wobei das elektrische Bauteil aus einem elektrischen Widerstand, der zum Liefern von Strom zu einer elektrischen LED-Lichtquelle erforderlich ist, oder einem Teil eines elektrischen Leiters, der geeignet ist, um einen Kurzschluss herzustellen, um Strom zu einer elektrischen Glühbirnen-Lichtquelle zu liefern, ausgewählt werden kann.

4. Umkonfigurierbare innere Kraftfahrzeug-Deckenlichteinheit (1) nach Anspruch 3, wobei die Enden der zwei Segmente der elektrisch leitenden Bahn, die elektrisch durch die Unterbrechung getrennt sind, zwei Paare gegenüberliegender, herausgebogener Laschen der elektrisch leitenden Bahn bilden, um zwei Stecker zu bilden, die angepasst sind, um auf abnehmbare Art entsprechende Endabschnitte des elektrischen Leiterteils oder von Leitungen des elektrischen Bauteils aufzunehmen und fest zu halten.

5. Umkonfigurierbare innere Kraftfahrzeug-Deckenlichteinheit (1) nach Anspruch 3, wobei der Tragkörper (2, 13) an der elektrischen Unterbrechung der elektrisch leitenden Bahn einen dazugehörenden Sitz definiert, der so geformt ist, dass er auf abnehmbare Art das elektrisch leitende Verbindungselement aufnehmen und fest halten kann, so dass Endabschnitte des elektrischen Leiterteils oder von Leitungen des elektrischen Bauteils in elektrischen Kontakt mit den Enden der zwei elektrisch isolierten Segmente der elektrisch leitenden Bahn kommen.

6. Umkonfigurierbare innere Kraftfahrzeug-Deckenlichteinheit (1) nach einem der vorhergehenden Ansprüche, wobei, um Umkonfiguration wie in b) zu erlauben, die Leiterplatte (24) ausgelegt ist, um einen Stromkreis zu bilden, der eine Kreistopologie derart hat, dass das Verwenden unterschiedlicher Stromschalter (22) nur das Wechseln des externen Stromanschlusses der E/A-Stromklemmen (25) der Leiterplatte (24) erfordert.

7. Umkonfigurierbare innere Kraftfahrzeug-Deckenlichteinheit (1) nach Anspruch 6, wobei die Leiterplatte (24) ausgelegt ist, um unterschiedslos zu erlauben, entweder einen Push-Push-Schalter oder einen nichtrastenden Taster elektrisch mit den Stromklemmen (27) für den Stromschalter (22) zu verbinden,
wobei die Leiterplatte (24) ausgelegt ist, um einen Stromkreis zu bilden, wobei eine der zwei Stromklemmen (27) für den Stromschalter (22) elektrisch mit einer ersten (Pin 1) E/A-Stromklemme (25) der Leiterplatte (24) verbunden ist, und die andere der zwei Stromklemmen (27) für den Stromschalter (22) elektrisch sowohl mit einer zweiten (Pin 2) E/A-Stromklemme (25) der Leiterplatte (24) als auch mit einer der zwei Stromklemmen (26) für die elektrische Lichtquelle (18), die zu steuern ist, verbunden ist, während die andere der zwei Stromklemmen (26) für die elektrische Lichtquelle (18) elektrisch mit einer dritten (Pin 3) E/A-Stromklemme (25) der Leiterplatte (24) verbunden ist,
wobei, wenn ein Push-Push-Schalter verwendet wird, die erste (Pin 1) E/A-Stromklemme (25) der Leiterplatte (24) dazu bestimmt ist, elektrisch mit einem elektrischen Erdungspotenzial verbunden zu werden, die zweite (Pin 2) E/A-Stromklemme (25) der Leiterplatte (24) dazu bestimmt ist, elektrisch mit einem Stromversorgungspotenzial verbunden zu werden, und die dritte (Pin 3) E/A-Stromklemme (25) der Leiterplatte (24) dazu bestimmt ist, elektrisch mit Schaltern verbunden zu werden, die assoziiert sind mit und betrieben werden von Fahrzeugtüren, die wiederum mit einem elektrischen Erdungspotenzial verbunden sind, so dass resultiert, dass die dritte (Pin 3) E/A-Stromklemme (25) der Leiterplatte (24) erdfrei ist, wenn alle Türen geschlossen sind, und mit einem elektrischen Erdungspotenzial verbunden ist, wenn irgendeine der Türen geöffnet wird, wodurch die elektrische Lichtquelle (18) eingeschaltet wird, entweder, wenn irgendeine der Türen geöffnet wird, oder wenn der Push-Push-Schalter (22) betätigt wird, und wobei, wenn ein nichtrastender Taster verwendet wird, die erste (Pin 1) E/A-Stromklemme (25) der Leiterplatte (24) dazu bestimmt ist, ein Eingangssignal zu empfangen, die zweite (Pin 2) E/A-Stromklemme (25) der Leiterplatte (24) dazu bestimmt ist, elektrisch mit einem elektrischen Erdungspotenzial verbunden zu werden, und die dritte (Pin 3) E/A-Stromklemme (25) der Leiterplatte (24) dazu bestimmt ist, elektrisch mit einem Stromversorgungspotenzial verbunden zu werden.

## Revendications

1. Ensemble de lampe plafonnier intérieur reconfigurable pour automobile (1) comprenant :
- un corps de support (2, 13) apte à être fixé dans un siège constitué dans un toit intérieur d'un véhicule motorisé ;
- un circuit imprimé (24) porté par le corps de support (2, 13) et comprenant des pistes électriquement conductrices formées pour définir des bornes d'entrée/sortie électriques (25) du circuit imprimé (24) aptes à être mises en prise avec un connecteur électrique externe, des bornes électriques (26) pour relier électriquement au moins une source lumineuse électrique (18), des bornes électriques (27) pour relier électriquement au moins un commutateur électrique (22), et un circuit électrique pour relier le commutateur électrique (22) et la source lumineuse électrique (18) l'un à l'autre et aux bornes d'entrée/sortie électriques (25) du circuit imprimé (24) ;
- au moins une source lumineuse électrique (18) électriquement reliée aux bornes électriques correspondantes (26) du circuit imprimé (24) pour éclairer une zone de l'intérieur de véhicule motorisé ; et
- au moins un commutateur électrique (22) électriquement relié aux bornes électriques correspondantes (26) du circuit imprimé (24) pour commander la source lumineuse électrique (18) ;
dans lequel le circuit imprimé (24) est conçu pour permettre :
a) l'interchangeabilité de la source lumineuse électrique (18), de manière à permettre une utilisation indifférente de types différents de sources lumineuses électriques qui, en raison de leur nature ou de leur mode de fonctionnement, nécessitent différentes topologies de circuit pour leur alimentation électrique ; et
b) l'interchangeabilité du commutateur électrique (22) de manière à permettre une utilisation indifférente de différents types de commutateurs électriques (22) qui, en raison de leur nature ou de leur mode de fonctionnement, nécessitent différentes topologies de circuit pour mettre la source lumineuse électrique (18) sous tension et hors tension ;
**caractérisé en ce que** le circuit imprimé (24) est en outre conçu pour permettre :
c) le rétroéclairage d'un commutateur électrique (22), lorsqu'un commutateur électrique (22) pourvu d'un couvercle ayant un idéogramme pouvant être rétroéclairé est utilisé dans l'ensemble de lampe plafonnier (1) ;
dans lequel, pour permettre une reconfiguration comme dans c), le circuit imprimé (24) est conçu pour former, à chaque emplacement d'un commutateur électrique (22) qui peut être choisi en tant que commutateur rétroéclairé ou non rétroéclairé, deux bornes d'alimentation électrique (27) reliées aux bornes d'entrée/sortie électriques (25) du circuit imprimé (24) et auxquelles des bornes électriques correspondantes d'une source de rétroéclairage électrique peuvent être électriquement reliées.

2. Ensemble de lampe plafonnier intérieur reconfigurable pour automobile (1) selon la revendication 1, dans lequel, pour permettre une reconfiguration comme dans a), le circuit imprimé (24) est conçu pour fournir, le long de l'une des deux pistes électriquement conductrices, une alimentation électrique à la source lumineuse électrique (18), une rupture électrique qui divise la piste électriquement conductrice en deux segments électriquement isolés, dont la continuité électrique peut être rétablie au moyen d'un élément de liaison électriquement conducteur qui peut être monté sur le circuit imprimé (24) pour électriquement relier les extrémités des deux segments de la piste électriquement conductrice interrompue et qui peut être choisi parmi différents composants électriques nécessaires pour fournir une alimentation électrique aux différents types de source lumineuse électrique.

3. Ensemble de lampe plafonnier intérieur reconfigurable pour automobile (1) selon la revendication 2, dans lequel le circuit imprimé (24) est conçu pour permettre indifféremment à une source lumineuse électrique incandescente ou à une source lumineuse électrique à LED d'être électriquement reliée aux bornes électriques (26) pour la source lumineuse électrique (18) ; et dans lequel le composant électrique peut être choisi parmi une résistance électrique nécessaire pour fournir une alimentation électrique à une source lumineuse électrique à LED ou un morceau de conducteur électrique apte à effectuer un court-circuit pour fournir une alimentation électrique à une source lumineuse électrique incandescente.

4. Ensemble de lampe plafonnier intérieur reconfigurable pour automobile (1) selon la revendication 3, dans lequel les extrémités des deux segments de la piste électriquement conductrice qui sont électriquement séparés par la rupture forment deux paires de languettes incurvées vers l'extérieur se faisant face de la piste électriquement conductrice de manière à former deux connecteurs aptes à recevoir et retenir stablement d'une manière amovible des portions d'extrémité correspondantes du morceau de conducteur électrique ou de fils conducteurs du composant électrique.

5. Ensemble de lampe plafonnier intérieur reconfigurable pour automobile (1) selon la revendication 3, dans lequel le corps de support (2, 13) définit, à la rupture électrique de la piste électriquement conductrice, un siège associé qui est formé de manière à recevoir et retenir stablement d'une manière amovible l'élément de liaison électriquement conducteur, de sorte que des portions d'extrémité du morceau de conducteur électrique ou des fils conducteurs du composant électrique entrent en contact électrique avec les extrémités des deux segments électriquement isolés de la piste électriquement conductrice.

6. Ensemble de lampe plafonnier intérieur reconfigurable pour automobile (1) selon l'une quelconque des revendications précédentes, dans lequel, de manière à permettre une reconfiguration comme dans b), le circuit imprimé (24) est conçu pour former un circuit électrique ayant une topologie de circuit de sorte que l'utilisation de différents commutateurs électriques (22) ne nécessite que le changement de la liaison électrique externe des bornes d'entrée/sortie électriques (25) du circuit imprimé (24).

7. Ensemble de lampe plafonnier intérieur reconfigurable pour automobile (1) selon la revendication 6, dans lequel le circuit imprimé (24) est conçu pour permettre indifféremment à un commutateur poussoir-poussoir ou à un commutateur bouton-poussoir temporaire d'être électriquement relié aux bornes électriques (27) pour le commutateur électrique (22) ;
dans lequel le circuit imprimé (24) est conçu pour former un circuit électrique dans lequel l'une des deux bornes électriques (27) pour le commutateur électrique (22) est électriquement reliée à une première borne d'entrée/sortie électrique (25) (broche 1) du circuit imprimé (24) et l'autre des deux bornes électriques (27) pour le commutateur électrique (22) est électriquement reliée à la fois à une deuxième borne d'entrée/sortie électrique (25) (broche 2) du circuit imprimé (24) et à l'une des deux bornes électriques (26) pour la source lumineuse électrique (18) à commander, alors que l'autre des deux bornes électriques (26) pour la source lumineuse électrique (18) est électriquement reliée à une troisième borne d'entrée/sortie électrique (25) (broche 3) du circuit imprimé (24) ;
dans lequel, si un commutateur poussoir-poussoir est utilisé, la première borne d'entrée/sortie électrique (25) (broche 1) du circuit imprimé (24) est destinée à être électriquement reliée à un potentiel de masse électrique, la deuxième borne d'entrée/sortie électrique (25) (broche 2) du circuit imprimé (24) est destinée à être électriquement reliée à un potentiel d'alimentation électrique et la troisième borne d'entrée/sortie électrique (25) (broche 3) du circuit imprimé (24) est destinée à être électriquement reliée à des commutateurs associés à des portières de véhicule motorisé qui les actionnent, qui sont à leur tour reliés à un potentiel de masse électrique, de manière à engendrer la flottaison de la troisième borne d'entrée/sortie électrique (25) (broche 3) du circuit imprimé (24) lorsque toutes les portières sont fermées et sa liaison à un potentiel de masse électrique lorsque l'une quelconque des portières est ouverte, de telle manière que la source lumineuse électrique (18) soit mise sous tension lorsque l'une quelconque des portières est ouverte ou lorsque le commutateur poussoir-poussoir (22) est actionné ;
et dans lequel, si un commutateur à bouton-poussoir temporaire est utilisé, la première borne d'entrée/sortie électrique (25) (broche 1) du circuit imprimé (24) est destinée à recevoir un signal d'entrée, la deuxième borne d'entrée/sortie électrique (25) (broche 2) du circuit imprimé (24) est destinée à être électriquement reliée à un potentiel de masse électrique, et la troisième borne d'entrée/sortie électrique (25) (broche 3) du circuit imprimé (24) est destinée à être électriquement reliée à un potentiel d'alimentation électrique.
